# EUROPÄISCHE PATENTANMELDUNG

(11) **EP 4 571 129 A1**
(43) Veröffentlichungstag der Anmeldung: **18.06.2025**
(21) Anmeldenummer: 24219533.7
(22) Anmeldetag: 12.12.2024
(51) Int. Cl.: F16B 19/10

(54) **BLINDNIET UND VERFAHREN ZUM DEMONTIEREN DES BLINDNIETS**

(30) Priorität: 15.12.2023 DE 102023135368
(71) Anmelder: LISI Automotive KKP GmbH & Co.KG, 97638 Mellrichstadt (DE)
(72) Erfinder: Berger, Olga, 97638 Mellrichstadt (DE)
(74) Vertreter: Habermann Intellectual Property Partnerschaft von Patentanwälten mbB

(57) **Zusammenfassung**

Bei einem Verfahren zum Demontieren eines Blindniets (1) mit einem Nietkörper (2) und einem in einer Nietkörperausnehmung (3) gelagerten Dorn (4) ist vorgesehen, dass in einem Demontageschritt der in einer Aufweitungsposition festgelegte Dorn (4) in Umfangsrichtung verdreht und dabei die Festlegung des Dorns (4) in der Aufweitungsposition gelöst wird, dass der Dorn (4) in Richtung eines Nietkörperkopfs (7) in eine Demontageposition verlagert und der hülsenförmige Nietschaftabschnitt (6) dadurch gestreckt und dabei radial zusammengezogen wird, bis der Nietschaftabschnitt (6) nicht mehr in einem formschlüssigen Eingriff mit einer einem Setzkopfabschnitt (5) des Nietkörpers (2) abgewandten zweiten Außenseite einer Bauteilanordnung steht, dass der Dorn (4) in der Demontageposition so festgelegt wird, dass sich der hülsenförmige Nietschaftabschnitt (6) des Nietkörpers (2) nicht mehr radial aufweiten kann, und dass anschließend der Nietkörper (2) in Richtung des Setzkopfabschnitts (5) aus der Ausnehmung in der Bauteilanordnung herausgezogen wird.

## Beschreibung

Die Erfindung betrifft einen Blindniet mit einem Nietkörper, der einen sich in einer Längsrichtung erstreckenden hülsenförmigen und mindestens abschnittsweise radial aufweitbaren Nietschaftabschnitt und einen radial über den Nietschaftabschnitt vorspringenden Setzkopfabschnitt aufweist, und mit einem sich ebenfalls in der Längsrichtung erstreckenden Dorn, der an einem dem Setzkopfabschnitt gegenüberliegenden Nietkörperkopf an dem Nietkörper axial festgelegt ist und sich entlang der Längsrichtung in einer Nietkörperausnehmung durch den Nietkörper hindurch bis über den Setzkopfabschnitt hinaus erstreckt, sodass der Dorn an einem in der Längsrichtung von dem Nietkörper abstehenden Greifabschnitt ergriffen werden kann und in Längsrichtung so in eine Aufweitungsposition verlagerbar ist, dass der daran festgelegte Nietkörperkopf in Richtung des Setzkopfabschnitts verlagert wird und der hülsenförmige Nietschaftabschnitt dabei radial aufgeweitet wird. Die Erfindung betrifft auch ein Verfahren zum Demontieren eines Blindniets mit einem Nietkörper, der einen hülsenförmigen und radial aufweitbaren Nietschaftabschnitt und einen radial über den Nietschaftabschnitt vorspringenden Setzkopfabschnitt sowie einen Dorn aufweist, der an einem dem Setzkopfabschnitt gegenüberliegenden Nietkörperkopf mit dem Nietkörper verbunden ist und sich entlang einer Längsrichtung durch den Nietkörper hindurch bis über den Setzkopfabschnitt hinaus erstreckt, sodass in einem Montageschritt der Nietkörper mit dem Nietkörperkopf voran durch eine durchgehende Ausnehmung in einer Bauteilanordnung hindurchgeführt werden kann, bis der Setzkopfabschnitt an einer dem Setzkopfabschnitt zugewandten ersten Außenseite der Bauteilanordnung anliegt, und der Dorn an einem in der Längsrichtung von dem Nietkörper abstehenden Greifabschnitt ergriffen und in Längsrichtung so in eine Aufweitungsposition verlagert und darin festgelegt werden kann, dass der daran festgelegte Nietkörperkopf in Richtung des Setzkopfabschnitts verlagert und der hülsenförmige Nietschaftabschnitt dadurch gestaucht und dabei radial aufgeweitet wird, bis der Nietschaftabschnitt formschlüssig an einer dem Setzkopfabschnitt abgewandten zweiten Außenseite der Bauteilanordnung anliegt, und dass der Greifabschnitt des Dorns an einer Sollbruchstelle von einem mit dem Nietkörper in Eingriff stehenden Nietkörperabschnitt des Dorns abgetrennt wird.

Niete sind Verbindungseinrichtungen, mit denen man zwei Bauteile formschlüssig miteinander verbinden kann. Ein Niet weist dabei ein plastisch verformbares und üblicherweise hülsenförmig ausgebildetes Verbindungselement auf, dass durch eine durch zwei miteinander zu verbindende Bauteile durchgehende Ausnehmung hindurch geführt wird. Ein Endabschnitt des hülsenförmigen Verbindungselements ist bereits radial vorspringend ausgebildet und liegt in einem Umgebungsbereich um die Ausnehmung an einer ersten Außenseite der beiden Bauteile an. Ein gegenüberliegender Endabschnitt des Verbindungselements wird durch einen Montagevorgang üblicherweise plastisch verformt und radial aufgeweitet, sodass auch dieser Endabschnitt in einem Umgebungsbereich um die Ausnehmung an einer der ersten Außenseite gegenüberliegenden und von dieser abgewandten zweiten Außenseite der beiden Bauteile anliegt. Die beiden radial vorspringenden Endabschnitte, die durch die Ausnehmung hindurch über das hülsenförmig ausgebildete Verbindungselement miteinander verbunden sind, bilden eine formschlüssige Festlegung der dazwischen angeordneten und regelmäßig eng aneinander anliegenden Bauteile.

Zur Festlegung eines Niet in der durch die zu verbindenden Bauteile hindurchgehenden Ausnehmung muss diese Ausnehmung und auch das hülsenförmige Verbindungselement üblicherweise von beiden Seiten aus zugänglich sein, damit während der Montage des Niets der erste radial vorspringende Endabschnitt an die erste Außenseite angedrückt und der gegenüberliegende und aus der Ausnehmung herausragende Endabschnitt des Verbindungselements plastisch verformt und radial aufgeweitet werden kann.

Es sind auch Blindniete bekannt, die von nur eine Seite der zu verbindenden Bauteile aus zugänglich sein müssen und ausschließlich von dieser Seite aus montiert werden können. Zu diesem Zweck weist ein Blindniet regelmäßig einen üblicherweise stiftförmigen Dorn auf, sich in einer Längsrichtung durch einen Nietkörper mit einem mindestens abschnittsweise radial aufweitbaren Nietschaftabschnitt hindurch erstreckt und an einem Nietkörperkopf in Längsrichtung und damit axial an dem Nietkörper festgelegt ist. An einem dem Nietkörperkopf gegenüberliegenden Ende des Nietkörpers ist ein radial vorspringender Setzkopfabschnitt ausgebildet. Der Dorn ragt mit einem Greifabschnitt über den Setzkopfabschnitt aus dem Nietkörper heraus. Zur Montage des Blindniets kann der Greifabschnitt des Dorns mit einem geeigneten Werkzeug, beispielsweise mit einer Blindnietzange ergriffen und der daran festgelegte Nietkörper in die Ausnehmung in den beiden Bauteilen eingeführt werden, bis der radial vorspringende Setzkopfabschnitt an der zugänglichen Außenseite der Bauteile anliegt, von welcher aus die Montage erfolgt. In dieser Position ragt mindestens ein Teilbereich des Nietschaftabschnitts des Nietkörpers mit dem Nietkörperkopf über die gegenüberliegende Außenseite hinaus aus der Ausnehmung heraus. Zum plastischen Verformen des Nietschaftabschnitts kann der Setzkopfabschnitt des Nietkörpers an der Außenseite des Bauteils zurückgehalten und der Dorn in entgegengesetzte Richtung, bzw. in Richtung des Setzkopfabschnitts aus der Ausnehmung herausgezogen werden, um den mit dem Dorn verbundenen Nietkörperkopf in Richtung des Setzkopfabschnitts zu verlagern. Dadurch wird der hülsenförmige Nietschaftabschnitt gestaucht und radial aufgeweitet, bis der radial aufgeweitete Nietschaftabschnitt die der zugänglichen Außenseite der Bauteile gegenüberliegende Außenseite der Bauteile hintergreift und einen formschlüssigen Eingriff bildet. Die beiden Bauteile sind dann zwischen dem radial vorspringenden Setzkopfabschnitt und dem während der Montage radial aufgeweiteten Nietschaftabschnitt eng aneinander anliegend festgelegt und miteinander verbunden. Der aus der Ausnehmung bzw. über den Setzkopfabschnitt des Nietkörpers herausragende Greifabschnitt des Dorns wird dann üblicherweise abgetrennt, wofür in dem Dorn an geeigneter Stelle eine Sollbruchstelle ausgebildet ist, welche das Abtrennen des Greifabschnitts erleichtert, sodass kein Trennwerkzeug verwendet werden muss.

Zum Lösen einer derartigen Verbindung, bzw. zum Herauslösen eines Blindniets ist es bekannt, dass der Blindniet von einer zugänglichen Außenseite aus aufgebohrt wird. Da dies meistens auch die für die Montage verwendete Außenseite ist, befindet sich dort der radial vorspringende Setzkopfabschnitt des Nietkörpers, der durch das zerstört, bzw. von dem Nietschaftabschnitt abgetrennt wird. Der verbleibende Nietkörper kann dann aus der Ausnehmung hinter die oftmals nicht zugängliche Außenseite heraus gedrückt werden.

In DE 10 2019 112 731 A1 ist ein Verfahren zur Demontage eines Blindniets beschrieben, mit welchem ein montierter Blindniet gegebenenfalls auch von der üblicherweise nicht zugänglichen Außenseite aus so bearbeitet wird, dass der Blindniet wieder aus der Ausnehmung herausgenommen werden kann. Zu diesem Zweck wird der während der Montage radial aufgeweitete Nietschaftabschnitt zerschnitten und von dem mit einem Gewindeabschnitt ausgebildeten Dorn gelöst.

In DE 10 2013 223 522 A1 ist ein anderes Verfahren zur Demontage eines Blindniets beschrieben, mit welchem der Dorn einen selbstschneidenden Gewindeabschnitt aufweist, der bei einem Verdrehen des Dorns einen sich in Richtung des Setzkopfabschnitts verjüngenden Bereich des hülsenförmigen Nietschaftabschnitts durchtrennt, sodass der Setzkopfabschnitt von dem verbleibenden Nietschaftabschnitt und insbesondere von dem radial aufgeweiteten Nietschaftabschnitt gelöst wird.

Bei beiden Verfahren wird der Blindniet während der Demontage zerstört und in mindestens zwei Teile zerlegt. Teile des zerlegten Blindniet müssen auf beiden Seiten der Ausnehmung aus der Ausnehmung herausgeführt bzw. von der Ausnehmung entfernt werden.

Es wird deshalb als eine Aufgabe der vorliegenden Erfindung angesehen, ein Blindniet so auszugestalten, dass der Blindniet nach einer Montage für eine formschlüssige Verbindung einer Bauteilanordnung wieder demontiert und dabei von einer Seite der Bauteilanordnung aus vollständig aus der Ausnehmung herausgenommen werden kann. Die Demontage soll möglichst einfach und rasch erfolgen können. Vorzugsweise soll der Blindniet bei der Demontage nicht zerstört werden.

Diese Aufgabe wird erfindungsgemäß dadurch gelöst, dass der Dorn mindestens ein radial nach außen vorspringendes Rasteingriffselement aufweist, dass der Nietkörper in der Nietkörperausnehmung mindestens ein daran angepasstes radial nach innen ragendes Rastanschlagelement aufweist, wobei in einer Aufweitungsposition das Rasteingriffselement des Dorns mit einer von dem Setzkopfabschnitt abgewandten Montageverriegelungsfläche an einer dem Setzkopfabschnitt zugewandten Montagefläche des Rastanschlagelements anliegt und den Dorn in der Aufweitungsposition zurückhält, dass der Dorn in Umfangsrichtung derart verdrehbar in der Nietkörperausnehmung gelagert ist, dass der formschlüssige Eingriff zwischen dem Rasteingriffselement des Dorns und dem Rastanschlagselement des Nietkörpers lösbar und der Dorn so in eine Entnahmeposition verlagerbar ist, dass der daran festgelegte Nietkörperkopf von dem Setzkopfabschnitt weg verlagert wird und der hülsenförmige Nietschaftabschnitt dabei radial zusammengezogen wird, wobei in der Entnahmeposition das Rasteingriffselement des Dorns mit einer dem Setzkopfabschnitt zugewandten Demontageverriegelungsfläche an einer dem Setzkopfabschnitt abgewandten Demontagefläche des Rastanschlagelements anlegbar ist.

Es wird als ein wesentlicher Aspekt der Erfindung angesehen, dass der bei herkömmlichen Blindnieten ausschließlich zum Zusammenziehen des Nietkörpers verwendete Dorn durch eine geeignete und aneinander angepasste Ausgestaltung des Nietkörpers und des Dorns auch für die Demontage verwendet werden kann. Zu diesem Zweck kann der Dorn nicht nur in einer Aufweitungsposition innerhalb des gestauchten und radial aufgeweiteten Nietkörpers festgelegt werden, sondern anschließend für die Demontage aus der Aufweitungsposition in eine Entnahmeposition verlagert und dort ebenfalls festgelegt werden, in welcher der Dorn den Nietkörper streckt und in seine ursprüngliche Formgebung zurückverformt. Der Blindniet mit dem zurückverformten Nietkörper, der wieder einen gestreckten und nicht mehr radial aufgeweiteten Nietschaftabschnitt aufweist, ist dann nicht mehr formschlüssig mit den Bauteilen in Eingriff und kann herausgezogen werden.

Um den Dorn in zwei verschiedenen Positionen in dem Nietkörper festlegen zu können weisen der Nietkörper und der Dorn aneinander angepasste Rastelemente auf, die so ausgestaltet sind, dass der Dorn sowohl in der Aufweitungsposition als auch in der Entnahmeposition jeweils an dem Nietkörperkopf einerseits und in einem unterschiedlichen Abstand zu dem Nietkörperkopf in der Nähe des Setzkopfabschnitts über einen Eingriff der Rastelemente andererseits an dem Nietkörper festgelegt werden kann. Die Rastelemente sind zudem zweckmäßigerweise so ausgestaltet, dass der Dorn während der Demontage zerstörungsfrei zwischen den beiden verschiedenen Positionen verlagert und wieder festgelegt werden kann.

Der Dorn muss für eine Verlagerung in Längsrichtung während der Demontage zunächst in Umfangsrichtung verdreht werden, bis der formschlüssige Eingriff des Rasteingriffelements des Dorns mit der Montagefläche an dem zugeordneten Rastanschlagelement des Nietkörpers gelöst ist, um anschließend den Dorn in Längsrichtung zu verlagern, wobei das Rasteingriffselement des Dorns in Umfangsrichtung seitlich neben dem Rastanschlagelement des Nietkörpers vorbeigeführt wird, bis sich der Dorn in der Demontageposition befindet und durch ein erneutes Verdrehen wieder das Rasteingriffselement des Dorns mit der Demontagefläche des zugeordneten Rastanschlagelements in einen formschlüssigen Eingriff gebracht wird.

In vorteilhafter Weise sind an einem radial nach innen ragenden Rastanschlagelement des Nietkörpers sowohl die dem Setzkopfabschnitt zugewandte Montagefläche des Rastanschlagelements als auch an einer entgegensetzten Außenseite des Rastanschlagelements die dem Setzkopfabschnitt abgewandten Demontagefläche des Rastanschlagelements ausgebildet sind. Es ist ebenfalls möglich, dass zwei verschiedene und in Umfangsrichtung beabstandet zueinander angeordnete Rastanschlagelemente so angeordnet und ausgebildet sind, dass ein Rastanschlagelement die Montagefläche aufweist, während das andere Rastanschlagelement die Demontagefläche aufweist. Es ist ebenfalls möglich, dass der Dorn zwei in Umfangsrichtung beabstandet zueinander angeordnete Rasteingriffselemente aufweist, von denen ein Rasteingriffselement die Montageverriegelungsfläche und ein anderes Rasteingriffselement die Demontageverriegelungsfläche aufweist.

Es kann vorgesehen sein, dass sich beispielsweise ein einzelnes Rastanschlagelement des Nietkörpers in Umfangsrichtung mit Ausnahme einer Lücke nahezu vollständig über den gesamten Umfang erstreckt, während sich das Rasteingriffselement des Dorns in Umfangsrichtung nur über einen kleinen Bereich erstreckt und das schmale Rasteingriffselement des Dorns in Längsrichtung durch die Lücke in dem Rastanschlagelement hindurchgeführt werden kann, ansonsten aber in vielen davon abweichenden Ausrichtungen mit dem Rastanschlagelement in Eingriff gebracht werden kann. Vorzugsweise ist vorgesehen, dass sich das Rasteingriffselement des Dorns in Umfangsrichtung über weniger als einen halben Umfang erstreckt, und dass sich das Rastanschlagelement des Nietkörpers in Umfangsrichtung über weniger als einen halben Umfang erstreckt. Eine aneinander angepasste und möglichst große Ausdehnung in Umfangsrichtung ermöglicht eine große Ausdehnung des Eingriffsbereichs bzw. der aneinander anliegenden Flächen der Rastelemente sowohl in der Aufweitungsposition als auch in der Entnahmeposition des Dorns. Wenn der Dorn mehr als ein Rasteingriffselement oder der Nietkörper mehr als ein Rastanschlagelement aufweist, sollte die Gesamterstreckung aller Rasteingriffselemente oder aller Rastanschlagselemente in Umfangsrichtung jeweils kleiner als der halbe Umfang sein. Durch die Vorgabe, dass die Erstreckung in Umfangsrichtung kleiner als der halbe Umfang ist soll erreicht werden, dass der Dorn in der Nietkörperausnehmung in Längsrichtung mit dem oder den Rasteingriffselementen an dem oder den Rastanschlagelementen vorbeigeführt werden kann. Gleichwohl ist eine möglichst große Erstreckung in Umfangsrichtung vorteilhaft für eine zuverlässige Festlegung des Dorns in der Aufweitungsposition oder in der Entnahmeposition.

Gemäß einer vorteilhaften Ausgestaltung des Erfindungsgedankens ist vorgesehen, dass der Dorn in Umfangsrichtung beabstandet zueinander zwei oder drei oder mehr radial vorspringende Rasteingriffselemente aufweist, die sich in Umfangsrichtung um insgesamt weniger als einen halben Umfang erstrecken, und dass der Nietkörper eine an die Rasteingriffselemente angepasste Anzahl in Umfangsrichtung beabstandet zueinander angeordnete Rastanschlagselemente aufweist, wobei die Anzahl der Rastanschlagselemente und deren jeweilige Erstreckung in Umfangsrichtung so vorgegeben sind, dass in einer Verriegelungsausrichtung des Dorns innerhalb der Nietkörperausnehmung die Rasteingriffselemente des Dorns einen formschlüssigen Eingriff mit den Montageflächen oder den Demontageflächen der Rastanschlagselemente des Nietkörpers bilden, und dass in einer Verlagerungsausrichtung des Dorns innerhalb der Nietkörperausnehmung die Rasteingriffselemente des Dorns in Längsrichtung zwischen den Rastanschlagselementen des Nietkörpers frei verlagerbar sind. Es hat sich als besonders vorteilhaft herausgestellt, dass der Dorn zwei in Umfangsrichtung einander gegenüberliegend angeordnete Rasteingriffselemente und der Nietkörper zwei in Umfangsrichtung einander gegenüberliegend angeordnete Rastanschlagelemente aufweist, die sich jeweils über fast ein Viertel des Umfangs erstrecken. Durch die einander gegenüberliegend angeordneten Rastelemente kann ein in Umfangsrichtung symmetrisch ausgebildeter Formschluss bewirkt werden, sodass kein unerwünschtes Kippmoment auf den in der Aufweitungsposition oder in der Entnahmeposition festgelegten Dorn ausgeübt wird. Mit jeweils nur zwei einander gegenüberliegend angeordneten Rastelementen kann erreicht werden, dass jedes einzelne Rastelement ausreichend groß und damit ausreichend mechanisch belastbar ausgebildet werden kann. Es kann aber auch vorgesehen und in einigen Anwendungsfällen vorteilhaft sein, dass in Umfangsrichtung mehr als zwei Rastelemente vorgesehen sind.

Um bei einem Zusammenstauchen des Nietkörpers eine möglichst kontrollierte und vorteilhafte radiale Aufweitung des Nietschaftabschnitts vorgeben zu können ist optional vorgesehen, dass der hülsenförmige Nietschaftabschnitt des Nietkörpers mehrere in Längsrichtung verlaufende und in Umfangsrichtung beabstandet zueinander angeordnete Verformungsstege aufweist, die durch eine in Längsrichtung auf die Verformungsstege einwirkende Druckkraft radial aufgeweitet und durch eine in Längsrichtung auf die Verformungsstege einwirkende Zugkraft radial zusammengezogen werden können. In vorteilhafter Weise weist der Nietschaftabschnitt zwei einander gegenüberliegend angeordnete Verformungsstege auf. Die Verformungsstege können im Wesentlichen flach ausgebildet sein und weitgehend ebene Außen- und Innenseiten aufweisen. Die Verformungsstege können in Längsrichtung quer zu der Längsrichtung oder in einem Winkel verlaufende Schwächungslinien aufweisen, um bei einem Verformungsvorgang eine angestrebte Verformung begünstigen und dadurch vorgeben zu können.

Einer Ausgestaltung des Erfindungsgedankens zufolge ist vorgesehen, dass der hülsenförmige Nietschaftabschnitt des Nietkörpers an dem Nietkörperkopf einen ringförmigen Festlegungsabschnitt mit mindestens einem radial nach innen ragenden Dornanschlagselement für eine axiale Festlegung des Dorns in dem Festlegungsabschnitt aufweist. Durch den ringförmigen Festlegungsabschnitt, der bei einer bestimmungsgemäßen Verwendung des Blindniets nicht radial aufgeweitet wird, werden die in den ringförmigen Festlegungsabschnitt mündenden Verformungsstege im Bereich des Nietkörperkopfs in radialer Richtung festgelegt. Eine radiale Aufweitung der Verformungsstege erfolgt demzufolge in einem Abstand zu dem ringförmigen Festlegungsabschnitt. Der Dorn kann im Bereich des ringförmigen Festlegungsabschnitts zuverlässig an dem Nietkörperkopf festgelegt werden, da keine radiale Aufweitung des ringförmigen Festlegungsabschnitts und auch keine radiale Verlagerung des mindestens einen nach innen ragenden Dornanschlagselements befürchtet werden muss.

Einer weiteren Ausgestaltung des Erfindungsgedankens zufolge kann vorgesehen sein, dass der Dorn an einem dem Nietkörperkopf zugewandten Einführungsende einen sich mit zunehmendem Abstand von dem Einführungsende radial aufweitenden Festlegungsflansch und in einem Abstand von dem Festlegungsflansch mindestens ein radial nach außen verlagerbares Festlegungsrastelement aufweist, welches auf einer von dem Einführungsende abgewandten Seite des Dornanschlagselements einen formschlüssigen Eingriff mit dem Dornanschlagselement bildet. Der sich radial aufweitende Festlegungsflansch kann wie eine pyramidenförmige oder kegelförmige Dornspitze ausgebildet sein. Vor einer Montage des Blindniets in einer Ausnehmung in einer Bauteilanordnung muss der Dorn von der dem Setzkopfabschnitt zugewandten Seite in Längsrichtung durch die Nietkörperausnehmung eingeführt und hindurchgeführt werden, bis der Festlegungsflansch an dem dem Setzkopfabschnitt abgewandten Ende des Nietkörperkopfs über den ringförmigen Festlegungsabschnitt hinausragt und der Festlegungsflansch mit einer dem Setzkopfabschnitt zugewandten ringförmigen Flanschfläche an einer ebenfalls ringförmig ausgebildeten Stirnseite des ringförmigen Festlegungselements anliegt und eine Zurückverlagerung des Dorns in Richtung des Setzkopfabschnitts verhindert. In dieser Position tritt das Festlegungsrastelement des Dorns mit dem nach innen ragenden Dornanschlagselement in dem ringförmigen Festlegungsabschnitt in Eingriff und verhindert, dass der Dorn relativ zu dem Nietkörper in der Nietkörperausnehmung weiter in Richtung des Nietkörperkopfs verlagert werden kann. Der Dorn ist dann relativ zu dem Nietkörperkopf axial festgelegt. Jede Verlagerung des Dorns bewirkt eine entsprechende Verlagerung des Nietkörperkopfs, sodass während der Montage des Blindniets durch ein Herausziehen des Dorns aus dem Nietkörper der Nietkörperkopf in Richtung des Setzkopfabschnitts verlagert und der Nietkörper gestaucht wird, während bei der Demontage des Blindniets der Nietkörperkopf durch ein erneutes Hineindrücken des Dorns in den Nietkörper wieder von dem Setzkopfabschnitt wegbewegt und der Nietkörper dadurch gestreckt wird.

Gemäß einer optionalen Ausgestaltung des Erfindungsgedankens ist vorgesehen, dass der Dorn zwischen dem mindestens einen radial nach außen vorspringenden Rasteingriffselement und dem Greifabschnitt eine Sollbruchstelle aufweist, sodass der Greifabschnitt des Dorns an der Sollbruchstelle von einem mit dem Nietkörper in Eingriff stehenden Nietkörperabschnitt des Dorns abtrennbar ist. Eine derartige Sollbruchstelle erleichtert nach der Montage und Festlegung des Blindniets in der Ausnehmung der Bauteilanordnung das Abtrennen des über den Setzkopfabschnitt des Nietkörpers herausragenden Greifabschnitts, der nach der Montage nicht mehr benötigt wird und oftmals wegen des von der Bauteilanordnung abstehenden Greifabschnitts, der den ästhetischen Eindruck der Verbindungsstelle beeinträchtigt und in der Umgebung um die Verbindungsstelle ein Hindernis bildet, auch nicht mehr gewünscht ist.

In besonders vorteilhafter Weise kann dann optional auch vorgesehen sein, dass der Dorn an einem der Sollbruchstelle zugewandten Ende des Nietkörperabschnitts eine nicht rotationssymmetrische Ausnehmung aufweist, die nach dem Abtrennen des Greifabschnitts von außen zugänglich ist und einen drehfesten Eingriff mit einem Demontagewerkzeug ermöglicht. Da der Dorn während der Demontage verdreht werden muss kann das Ergreifen und Verdrehen des Dorns durch eine nicht rotationssymmetrische Ausnehmung wesentlich erleichtert werden, in welche ein geeignetes Demontagewerkzeug eingeführt und sowohl für die Drehbewegung des Dorns als auch für die lineare Verlagerung in Längsrichtung in der Nietkörperausnehmung verwendet und entsprechend gehandhabt werden kann. Die nicht rotationssymmetrische Ausnehmung kann beispielsweise eine keilförmige Ausnehmung sein, die an eine Schraubendreherspitze angepasst ist. Die nicht rotationssymmetrische Ausnehmung kann beispielsweise auch ein Innensechskant sein, sodass der Dorn mit einem Innensechskantschlüssel verdreht und in Längsrichtung verlagert werden kann. Es sind auch andere Formgebungen für die Ausnehmung denkbar.

Zweckmäßigerweise kann auch vorgesehen sein, dass das radial nach außen vorspringende Rasteingriffselement des Dorns an einer der Sollbruchstelle zugewandten Federzunge angeordnet ist und der Dorn in einem der Sollbruchstelle zugewandten Verformungsbereich des Greifabschnitt Ausnehmungen aufweist, die eine radiale Verlagerung der Federzunge mit dem radial nach außen vorspringenden Rasteingriffselement ermöglichen. Auf diese Weise kann das nach außen vorspringende Rasteingriffselement beispielsweise während der Montage bei einem teilweisen Herausziehen des Dorns aus der Nietkörperausnehmung radial nach innen verlagert und dadurch an dem nach innen vorspringenden Rastanschlagselement des Nietkörpers entlang geführt werden, ohne dass ein Verdrehen des Dorns relativ zu dem Nietkörper erforderlich wird. Der Blindniet kann dann mit einer einander zugewandten Ausrichtung des Rasteingriffselements des Dorns und des Rastanschlagselements des Nietkörpers in die Ausnehmung der Bauteilanordnung eingeführt werden. Für die Montage des Blindniets und dessen Festlegung in der Ausnehmung muss dann lediglich der Dorn in Längsrichtung teilweise herausgezogen werden, bis das zunächst radial nach innen verlagerte Rasteingriffselement des Dorns das zugeordnete Rastanschlagelement des Nietkörpers hintergreift und mit der Federzung radial nach außen verlagert wird, sodass die Montageverriegelungsfläche der Rasteingriffselements mit der zugeordneten Montagefläche des Rastanschlagelements in Eingriff tritt und der Dorn in der etwas herausgezogenen Position, bzw. in der Aufweitungsposition festgelegt ist. Die Rastelemente und damit die Ausgestaltung und Ausrichtung der Montagefläche und der Demontagefläche des Rastanschlagelements sowie die Ausgestaltung und Ausrichtung der Montageverriegelungsfläche und der Demontageverriegelungsfläche sind zweckmäßigerweise so vorgegeben, dass der Dorn während der Montage mit dem radial nach innen federnden Rasteingriffselement über das Rastanschlagelement hinweggeführt werden kann, nach einer Festlegung des Dorns in der Aufweitungsposition jedoch eine Zurückverlagerung des Rasteingriffselements über das Rastanschlagselement hinweg zuverlässig verhindert wird. Dies kann beispielsweise durch eine geeignet vorgegebene Neigung der jeweiligen Flächen relativ zu der Längsrichtung des Dorns erreicht werden.

Die Erfindung betrifft auch ein Verfahren zum Demontieren eines Blindniets. Bei den eingangs bereits geschilderten herkömmlichen Verfahren muss jeweils der Nietkörper entweder im Bereich des Setzkopfabschnitts oder im Bereich des radial aufgeweiteten Nietschaftabschnitts aufgetrennt oder zerstört werden. Dabei wird der Blindniet jeweils in mindestens zwei Teile zerlegt, die nur so aus der Ausnehmung in der Bauteilanordnung herausgelöst werden können, dass auf beiden gegenüberliegenden Außenseiten der Bauteilanordnung jeweils mindestens ein Teil des zerstörten Blindniets verbleibt.

Es wird deshalb als ein weiterer Aspekt der Aufgabe angesehen, ein Verfahren zum Demontieren eines Blindniets bereitzustellen, welches es ermöglicht, einen Blindniet so zu demontieren, dass der demontierte Blindniet vollständig zu einer Außenseite der Bauteilanordnung hin aus der Ausnehmung entfernt werden kann. Es wäre zudem vorteilhaft, wenn der Blindniet zerstörungsfrei demontiert werden könnte.

Dieser weitere Aspekt der Aufgabe wird erfindungsgemäß durch ein Verfahren zum Demontieren eines zuvor in einer Ausnehmung einer Bauteilanordnung festgelegten Blindniets gelöst, wobei in einem Demontageschritt der in der Aufweitungsposition festgelegte Dorn in Umfangsrichtung verdreht und dabei die Festlegung des Dorns in der Aufweitungsposition gelöst wird, wobei der Dorn in Richtung des Nietkörperkopfs in eine Demontageposition verlagert und der hülsenförmige Nietschaftabschnitt dadurch gestreckt und dabei radial zusammengezogen wird, bis der Nietschaftabschnitt nicht mehr in einem formschlüssigen Eingriff mit der dem Setzkopfabschnitt abgewandten zweiten Außenseite der Bauteilanordnung steht, wobei der Dorn in der Demontageposition so festgelegt wird, dass sich der hülsenförmige Nietschaftabschnitt des Nietkörpers nicht mehr radial aufweiten kann, und wobei anschließend der Nietkörper in Richtung des Setzkopfabschnitts aus der Ausnehmung in der Bauteilanordnung herausgezogen wird. Gemäß den voranstehenden Ausführungen wird es als ein wesentlicher Aspekt des erfindungsgemäßen Verfahrens angesehen, dass der Dorn zwischen einer Aufweitungsposition einerseits und einer Entnahmeposition andererseits verlagert werden kann und dabei der Nietkörper für die Montage gestaucht und für die Demontage wieder gestreckt wird. Die zwischen den Positionen erforderliche Verlagerung des Dorns in Längsrichtung in der Nietkörperausnehmung und die in beiden Positionen erforderliche formschlüssige Festlegung des Nietkörpers an dem Dorn wird dadurch ermöglicht, dass der Dorn in der Nietkörperausnehmung in Umfangsrichtung verdreht und dadurch ein formschlüssiger Eingriff zwischen Rastelementen an dem Dorn und an dem Nietkörper hergestellt oder aber gelöst werden kann.

Für die Durchführung des erfindungsgemäßen Verfahrens eignet sich in besonders vorteilhafter Weise ein ebenfalls erfindungsgemäß ausgestalteter Blindniet mit den vorangehend beschriebenen Merkmalen und Vorteilen. Für eine Beschreibung des erfindungsgemäßen Verfahrens und der jeweiligen Vorteile wird deshalb auf die diesbezüglichen Ausführungen bei der Beschreibung des Blindniets verwiesen.

In besonders vorteilhafter Weise ist gemäß einer weiteren Ausgestaltung des Erfindungsgedankens vorgesehen, dass der Dorn in dem Demontageschritt mit Hilfe eines Demontagewerkzeugs verdreht wird, welches in einen drehfesten Eingriff mit einer von dem Setzkopfabschnitt zugänglichen nicht rotationssymmetrischen Ausnehmung des Nietkörpers gebracht wurde. Die Formgebung der Ausnehmung kann so vorgegeben sein, dass als Demontagewerkzeug beispielsweise ein Schraubendreher oder ein Innensechskantschlüssel verwendet werden können. Solche Werkzeuge sind handelsüblich, leicht verfügbar und günstig erhältlich. Aufwendige und kostenintensive Spezialwerkzeuge, die zudem ausschließlich für eine Demontage eines entsprechend ausgestalteten Blindniets verwendet werden könnten, sind nicht erforderlich. Das erfindungsgemäße Verfahren kann mit wenigen Handgriffen und ohne größeren Kraftaufwand durchgeführt werden. Der zuvor montierte Blindniet kann von der dem Setzkopfabschnitt zugewandten Außenseite der Bauteilanordnung demontiert und vollständig aus der Ausnehmung herausgezogen werden.

Nachfolgend werden exemplarisch verschiedene Aspekte eines erfindungsgemäß ausgestalteten Blindniets und eines Verfahrens zu dessen Demontage näher erläutert, die in den Zeichnungen dargestellt sind. Es zeigt:
Fig. 1 eine Seitenansicht eines erfindungsgemäßen Blindniets mit einem Nietkörper und mit einem darin festgelegten Dorn,
Fig. 2 eine Seitenansicht des in Fig. 1 dargestellten Nietkörpers,
Fig. 3 eine Schnittansicht des in Fig. 2 gezeigten Nietkörpers längs einer Linie III-III in Fig. 2,
Fig. 4 eine Seitenansicht des in Fig. 1 dargestellten Dorns,
Fig. 5 eine weitere Seitenansicht des in Fig. 1 und in Fig. 4 dargestellten Dorns aus einer anderen Ansicht,
Fig. 6 eine perspektivische Ansicht des in Fig. 1 gezeigten Blindniets,
Fig. 7 eine Schnittansicht des in Fig. 1 und in Fig. 6 gezeigten Blindniets,
Fig. 8 bis Fig. 10 drei verschiedene Momentaufnahmen während der Montage des Blindniets in einer Ausnehmung in einer Bauteilanordnung, und
Fig. 11 bis Fig. 15 fünf verschiedene Momentaufnahmen während der Demontage des Blindniets aus der Ausnehmung der Bauteilanordnung.

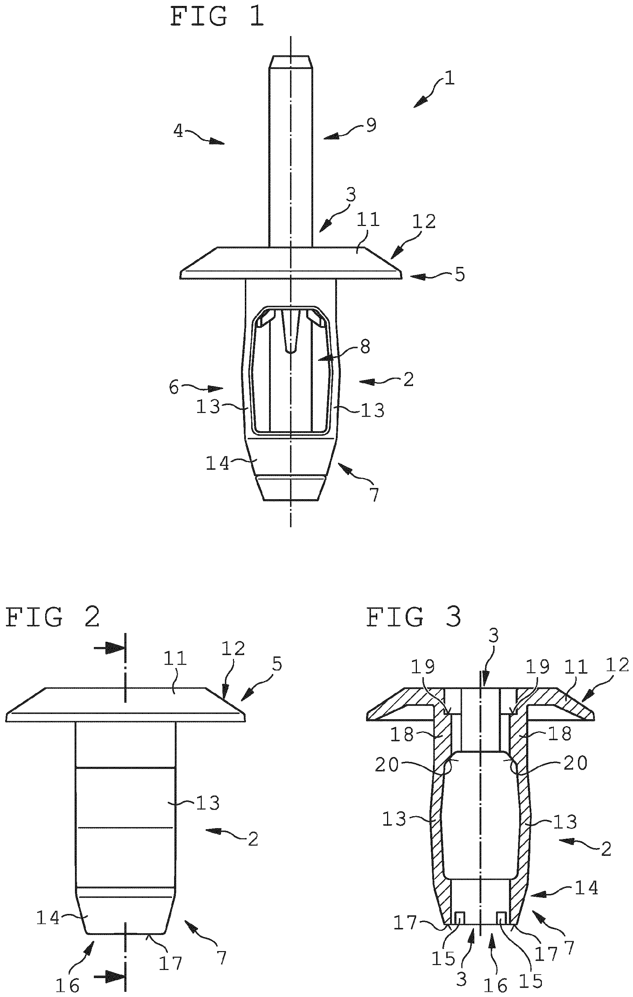

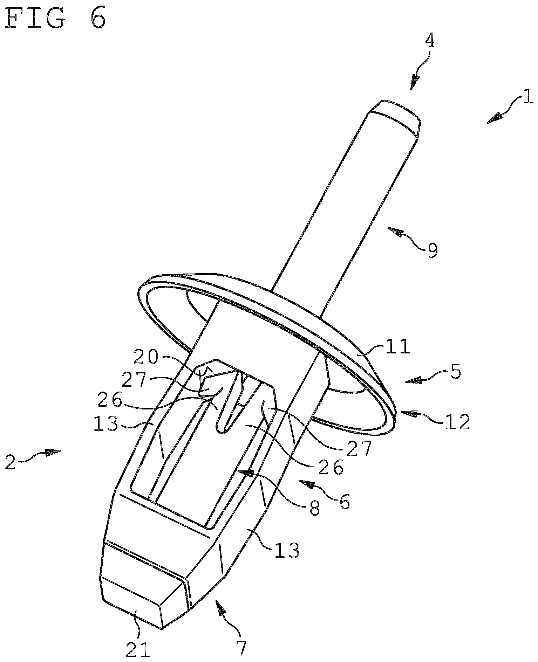

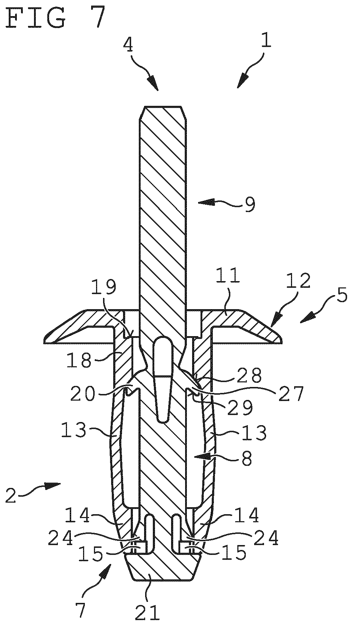

Ein in Fig. 1, in Fig. 6 und in Fig. 7 gezeigter Blindniet 1 weist einen Nietkörper 2 und einen in einer Nietkörperausnehmung 3 in Längsrichtung verlagerbaren Dorn 4 auf. Der Nietkörper 2 weist an einem Ende einen radial vorspringenden Setzkopfabschnitt 5 auf, der in einen sich in Längsrichtung erstreckenden hülsenförmigen Nietschaftabschnitt 6 übergeht, der in einen Nietkörperkopf 7 an einem dem Setzkopfabschnitt 5 gegenüberliegenden Ende des Nietkörpers 2 mündet. Der Dorn 4 weist einen in der Nietkörperausnehmung 3 befindlichen Nietkörperabschnitt 8 und einen in Längsrichtung über den Setzkopfabschnitt 5 des Nietkörpers herausragenden Greifabschnitt 9 auf. Der Greifabschnitt 9 ist über eine Sollbruchstelle 10 mit dem Nietkörperabschnitt 8 des Dorns 4 verbunden.

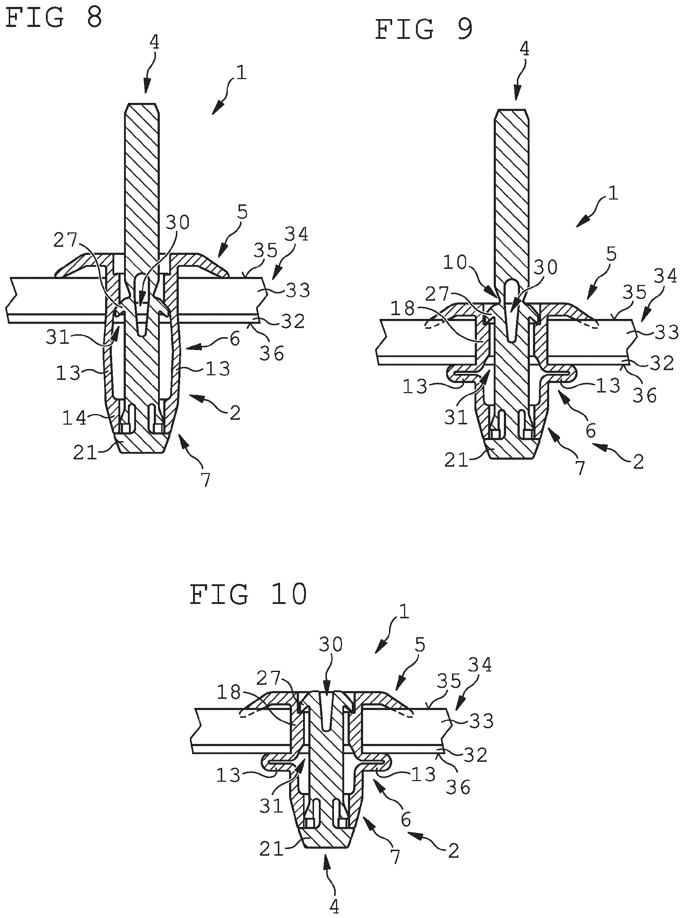

In dem Setzkopfabschnitt 5 ist ein radial vorspringender Setzkopfflansch 11 ausgebildet. In einem elastisch verformbaren Randbereich 12 des Setzkopfflanschs 11 verläuft der Setzkopfflansch 11 in einem Winkel in Richtung des Nietkörperkopfs 7, um in einem montierten Zustand des Blindniets 1, wie er beispielsweise in Fig. 10 dargestellt ist, entgegen einer Federkraft an eine Außenseite einer Bauteilanordnung angedrückt werden zu können.

In dem hülsenförmig ausgebildeten Nietschaftabschnitt 6 weist der in den Fig. 2 und 3 einzeln dargestellte Nietkörper 2 zwei im Wesentlichen flach und rechteckförmig ausgebildete Verformungsstege 13 auf, die sich von dem Setzkopfabschnitt 5 bis hin zu dem Nietkörperkopf 7 erstrecken. Der Nietkörperkopf 7 weist einen ringförmigen Festlegungsabschnitt 14 auf. In dem ringförmigen Festlegungsabschnitt 14 sind mehrere radial nach innen vorspringende Dornanschlagselemente 15 ausgebildet. Der ringförmige Festlegungsabschnitt 14 weist an einer dem Setzkopfabschnitt 5 abgewandten Stirnseite 16 eine ringförmige Anschlagfläche 17 auf.

In einem Übergangsbereich zwischen dem Setzkopfabschnitt 5 und den Verformungsstegen 13 in dem hülsenförmigen Nietschaftabschnitt 6 weist der Nietkörper 2 zwei in Umfangsrichtung an gegenüberliegenden Seiten angeordnete und radial nach innen vorspringende Rastanschlagelemente 18 auf. Auf einer dem Setzkopfabschnitt 5 zugewandten Seite weist jedes Rastanschlagelement 18 eine dem Setzkopfabschnitt 5 zugewandte Montagefläche 19 auf. Auf einer in Längsrichtung gegenüberliegenden und dem Setzkopfabschnitt 5 abgewandten Seite weist jedes Rastanschlagelement 18 eine von dem Setzkopfabschnitt 5 abgewandte Demontagefläche 20 auf. Die Montagefläche 19 und die Demontagefläche 20 ermöglichen einen formschlüssigen Eingriff mit dem Dorn 4 in dessen Aufweitungsposition und in dessen Entnahmeposition, worauf später näher eingegangen wird.

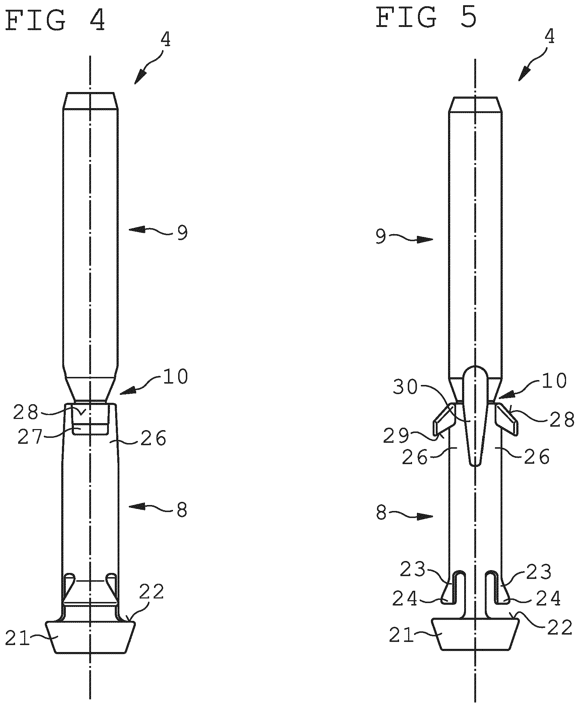

Der in Fig. 4 und in Fig. 5 einzeln dargestellte Dorn 4 weist an einem dem Greifabschnitt 9 abgewandten Ende einen sich radial in Richtung des Greifabschnitts 9 aufweitenden Festlegungsflansch 21 auf. Dieser radial aufweitende Festlegungsflansch 21 kann als Dornspitze ausgebildet sein und beispielsweise pyramidenstumpfförmig oder kegelstumpfförmig gestaltet sein. Auf einer dem Greifabschnitt 9 zugewandten Seite weist der Festlegungsflansch 21 eine ringförmige Flanschfläche 22 auf. Der Dorn 4 wird zweckmäßigerweise vor der Montage von dem Setzkopfabschnitt 5 aus in die Nietkörperausnehmung 3 eingeführt und in Längsrichtung verlagert, bis der Festlegungsflansch 21 über den ringförmigen Festlegungsabschnitt 14 hinaus geführt ist und die ringförmige Flanschfläche 22 an der ringförmigen Anschlagfläche 17 an der Stirnseite 16 des Festlegungsabschnitts 14 anliegt. Ein Zurückziehen des Dorns 4 in Richtung des Setzkopfabschnitts 5 bedingt dann durch den formschlüssigen Eingriff zwischen dem Festlegungsflansch 21 des Dorns 4 und der Stirnseite 16 des Festlegungsabschnitts 14 des Nietkörpers 2 zwingend eine entsprechende Verlagerung des Nietkörperkopfs 7.

Der Dorn 4 weist in einem Abstand zu dem sich radial aufweitenden Festlegungsflansch 21 zwei in Richtung des Festlegungsflanschs 21 ausgerichtete Federzungen 23 mit jeweils einem radial verlagerbaren Festlegungsrastelement 24 auf. Sobald der Dorn 4 soweit in der Nietkörperausnehmung 3 verlagert ist, dass die Flanschfläche 22 des Festlegungsflanschs 21 an der Stirnseite 16 des Festlegungsabschnitts 14 anliegt, bilden die radial nach außen vorspringenden Festlegungsrastelemente 24 einen formschlüssigen Eingriff mit den radial nach innen ragenden Dornanschlagselementen 15, die an dem Nietkörper 2 ausgebildet sind. Der Dorn 4 wird dann in der Längsrichtung durch jeweils einen formschlüssigen Eingriff in beiden Richtungen und damit axial festgelegt.

Der Dorn 4 weist in einem dem Festlegungsflansch 21 gegenüberliegenden Bereich innerhalb des Nietkörperabschnitts 8 nahe der Sollbruchstelle 10 zwei in Umfangsrichtung an gegenüberliegenden Seiten ausgebildete Federzungen 26 mit radial nach außen vorspringenden Rasteingriffselementen 27 auf. An jedem Rasteingriffselement 27 ist eine dem Greifabschnitt 9 des Dorns 4 zugewandte Montageverrieglungsfläche 28 und auf einer gegenüberliegenden Seite des Rasteingriffselements 27 eine von dem Greifabschnitt 9 abgewandte Demontageverriegelungsfläche 29 ausgebildet. Die Montageverriegelungsfläche 28 und die Demontageverriegelungsfläche 29 sind jeweils radial nach außen verlaufend in Richtung des Festlegungsflanschs 21 geneigt. Zwischen den beiden Federzungen 26 ist eine keilförmige und damit nicht rotationssymmetrische Ausnehmung 30 ausgebildet. Sobald der Greifabschnitt 9 entlang der Sollbruchstelle 10 von dem Nietkörperabschnitt 8 des Dorns 4 abgetrennt wird ist die Ausnehmung 30 von außen aus zugänglich.

In den Fig. 8 bis 10 sind verschiedene Momentaufnahmen während einer Montage des Blindniets 1 in einer durchgehenden Ausnehmung 31 in einer aus zwei plattenförmigen Bauteilen 32, 33 gebildeten Bauteilanordnung 34 gezeigt. Der Dorn 4 ist in der Nietkörperausnehmung 3 vormontiert. Die Verformungsstege 13 in dem hülsenförmigen Nietschaftabschnitt 6 sind gestreckt und radial nicht aufgeweitet. Der Blindniet 1 kann dann in einfacher Weise an dem Greifabschnitt 9 des Dorns 4 ergriffen und in die Ausnehmung 31 eingeführt werden, bis der Setzkopfflansch 11 mit dessen Randbereich 12 an einer ersten Außenseite 35 der Bauteilanordnung 34 anliegt und dadurch ein weiteres Einführen des Nietkörpers 2 in die Ausnehmung 31 verhindert wird. In dieser Position ragen der Nietkörperkopf 7 des Nietkörpers 2 und der größte Teil des hülsenförmigen Nietschaftabschnitts 6 über eine der ersten Außenseite 35 gegenüberliegenden und davon abgewandten zweiten Außenseite 36 der Bauteilanordnung 34 hinaus.

Für eine formschlüssige Festlegung des Blindniets 1 in der Ausnehmung 31 und eine dadurch bewirkte formschlüssige Verbindung der beiden plattenförmigen Bauteile 32 und 33 miteinander wird während der Montage der Greifabschnitt 9 des Dorns 4 beispielweise mit einer Blindnietzange ergriffen und von dem Nietkörper 2 weg gezogen. Durch die dadurch bewirkte Verlagerung des Dorns 4 innerhalb der Nietkörperausnehmung 3 wird der Nietkörperkopf 7 in Richtung des weiterhin an der ersten Außenseite 35 anliegenden und dort zurückgehaltenen Setzkopfabschnitts 5 gezogen und der Nietkörper 2 dadurch gestaucht, sodass sich die Verformungsstege 13 verformen und radial aufweiten. Der Dorn 4 wird solange aus dem Nietkörper 2 herausgezogen, bis die beiden Rasteingriffselemente 27 des Dorns 4 radial nach außen vorspringen und die Montageverrieglungsflächen 28 der Rasteingriffselemente 27 des Dorns 4 an den Montageflächen 19 der radial nach innen vorspringenden Rastanschlagelemente 18 anliegen, wodurch ein formschlüssiger Eingriff gebildet wird. Der Dorn 4 befindet sich jetzt in einer in Fig. 9 gezeigten Aufweitungsposition. Die radial nach außen verformten Verformungsstege 13 liegen an der zweiten Außenseite 37 der Bauteilanordnung 34 an, die demzufolge zwischen den radial aufgeweiteten Verformungsstegen 13 und dem radial vorspringenden Setzkopfflansch 11 zusammengedrückt und formschlüssig verbunden sind.

Zum Abschluss der Montage kann der Greifabschnitt 9 des Dorns 4 entlang der Sollbruchstelle 10 von dem in dem Nietkörper 2 festgelegten Nietkörperabschnitt 8 des Dorns 4 abgetrennt werden.

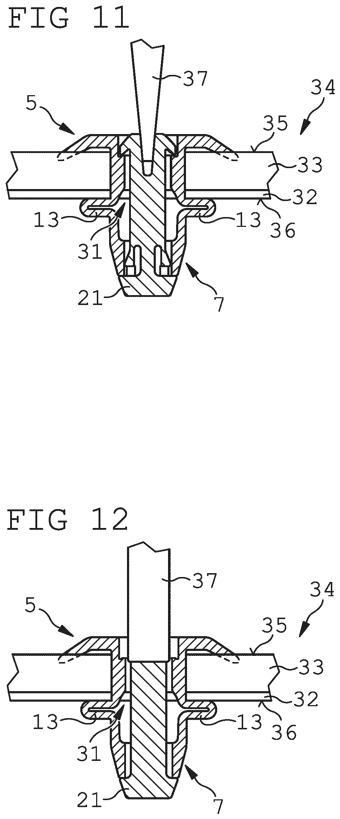

Für die in den Fig. 11 bis 15 in einigen Momentaufnahmen gezeigte Demontage des Blindniets 1 kann ein geeignetes Demontagewerkzeug 37, beispielsweise ein Schraubendreher, in die von der ersten Außenseite 35 aus zugängliche und nicht rotationssymmetrische Ausnehmung 30 eingeführt werden, wie es in Fig. 11 gezeigt ist. Mit Hilfe des Demontagewerkzeugs 37 wird dann der Dorn 4 in Umfangsrichtung verdreht, bis der formschlüssige Eingriff zwischen den radial nach außen vorspringenden Rasteingriffselementen 27 des Dorns 4 und den radial nach innen vorspringenden Rastanschlagelementen 18 gelöst ist. Bei dem dargestellten Ausführungsbeispiel muss der Dorn 4 für das Lösen des formschlüssigen Eingriffs um etwa 90 Grad verdreht werden, wobei es nicht auf den Drehsinn bei der Drehbewegung ankommt. Der in Umfangsrichtung verdrehte Dorn 4 ist in Fig. 12 gezeigt.

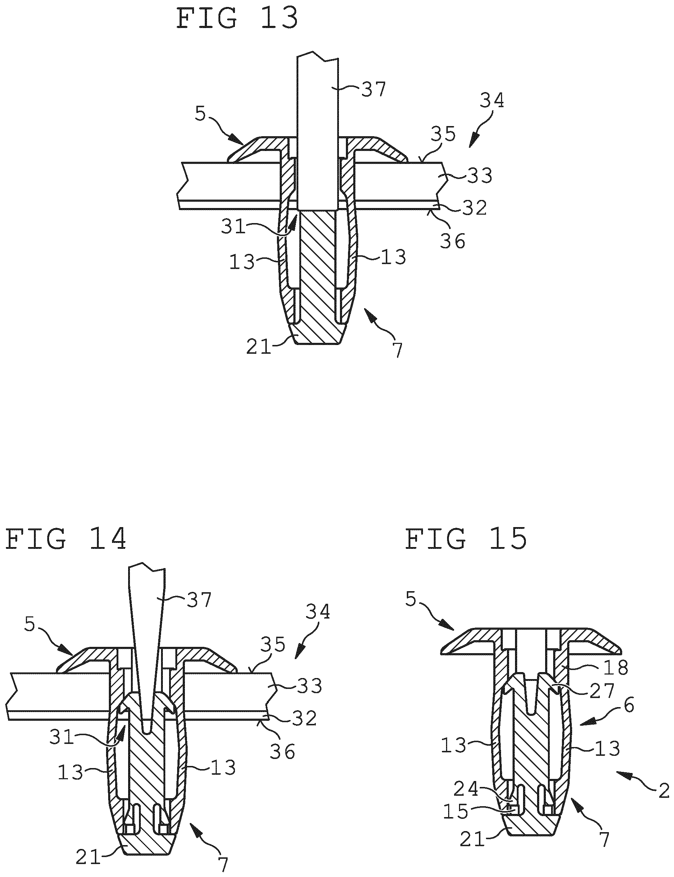

Anschließend kann der Dorn 4 mit Hilfe des Demontagewerkzeugs 37 in Richtung des Nietkörperkopfs 7 in Längsrichtung verlagert werden. Dabei werden die in der Montageposition radial nach außen aufgeweiteten Verformungsstege 13 wieder gestreckt und radial zusammengezogen. Der Dorn 4 wird solange in Richtung des Nietkörperkopfs 7 verlagert, bis sich die Rasteingriffselemente 27 des Dorns 4 in Längsrichtung hinter den radial nach innen vorspringenden Rastanschlagelementen 18 befinden, wie es in Fig. 13 gezeigt ist.

Wenn dann der Dorn 4 in Umfangsrichtung erneut verdreht wird, werden die Demontageverriegelungsflächen 29 der radial nach außen vorspringenden Rasteingriffselemente 27 des Dorns 4 mit den Demontageflächen 20 der radial nach innen ragenden Rastanschlagelemente 18 in Anlage gebracht und dadurch wieder ein formschlüssiger Eingriff gebildet, der eine Zurückverlagerung des Dorns 4 in Richtung des Setzkopfabschnitts 5 verhindert. Der Dorn 4 befindet sich dann in einer Demontageposition, in welcher der Dorn 4 den wieder gestreckten Nietkörper 2 in der radial zusammengezogenen Formgebung fixiert, wie es in Fig. 14 gezeigt ist.

Abschließend kann der Blindniet 1 von der ersten Außenseite 35 aus vollständig aus der Ausnehmung 31 herausgezogen werden. Für die Demontage muss der Blindniet 1 nur von der ersten Außenseite 35 aus zugänglich sein. Der Blindniet 1 kann vollständig in Richtung der ersten Außenseite 35 aus der Ausnehmung 31 herausgezogen werden, ohne dass Teile des Blindniets 1 auf einer gegenüberliegenden Seite der Bauteilanordnung 34 verbleiben.

## Patentansprüche

1. Blindniet (1) mit einem Nietkörper (2), der einen sich in einer Längsrichtung erstreckenden hülsenförmigen und mindestens abschnittsweise radial aufweitbaren Nietschaftabschnitt (6) und einen radial über den Nietschaftabschnitt (6) vorspringenden Setzkopfabschnitt (5) aufweist, und mit einem sich ebenfalls in der Längsrichtung erstreckenden Dorn (4), der an einem dem Setzkopfabschnitt (5) gegenüberliegenden Nietkörperkopf (7) an dem Nietkörper (2) axial festgelegt ist und sich entlang der Längsrichtung in einer Nietkörperausnehmung (3) durch den Nietkörper (2) hindurch bis über den Setzkopfabschnitt (5) hinaus erstreckt, sodass der Dorn (4) an einem in der Längsrichtung von dem Nietkörper (2) abstehenden Greifabschnitt (9) ergriffen werden kann und in Längsrichtung so in eine Aufweitungsposition verlagerbar ist, dass der daran festgelegte Nietkörperkopf (7) in Richtung des Setzkopfabschnitts (5) verlagert wird und der hülsenförmige Nietschaftabschnitt (6) dabei radial aufgeweitet wird, **dadurch gekennzeichnet, dass** der Dorn (4) mindestens ein radial nach außen vorspringendes Rasteingriffselement (27) aufweist, dass der Nietkörper (2) in der Nietkörperausnehmung (3) mindestens ein daran angepasstes radial nach innen ragendes Rastanschlagelement (18) aufweist, wobei in einer Aufweitungsposition das Rasteingriffselement (27) des Dorns (4) mit einer von dem Setzkopfabschnitt (5) abgewandten Montageverriegelungsfläche (28) an einer dem Setzkopfabschnitt (5) zugewandten Montagefläche (19) des Rastanschlagelements (18) anliegt und den Dorn (4) in der Aufweitungsposition zurückhält, dass der Dorn (4) in Umfangsrichtung derart verdrehbar in der Nietkörperausnehmung (3) gelagert ist, dass der formschlüssige Eingriff zwischen dem Rasteingriffselement (27) des Dorns (4) und dem Rastanschlagselement (18) des Nietkörpers (2) lösbar und der Dorn (4) so in Längsrichtung in eine Entnahmeposition verlagerbar ist, dass der daran festgelegte Nietkörperkopf (7) von dem Setzkopfabschnitt (5) weg verlagert wird und der hülsenförmige Nietschaftabschnitt (6) dabei radial zusammengezogen wird, wobei in der Entnahmeposition das Rasteingriffselement (27) des Dorns (4) mit einer dem Setzkopfabschnitt (5) zugewandten Demontageverriegelungsfläche (29) an einer dem Setzkopfabschnitt (5) abgewandten Demontagefläche (20) des Rastanschlagselements (18) anlegbar ist.

2. Blindniet (1) nach Anspruch 1, **dadurch gekennzeichnet, dass** sich das Rasteingriffselement (27) des Dorns (4) in Umfangsrichtung über weniger als einen halben Umfang erstreckt, und dass sich das Rastanschlagelement (18) des Nietkörpers (2) in Umfangsrichtung über weniger als einen halben Umfang erstreckt.

3. Blindniet (1) nach Anspruch 1 oder Anspruch 2, **dadurch gekennzeichnet, dass** der Dorn (4) in Umfangsrichtung beabstandet zueinander zwei oder drei oder mehr radial vorspringende Rasteingriffselemente (27) aufweist, die sich in Umfangsrichtung um insgesamt weniger als einen halben Umfang erstrecken, und dass der Nietkörper (2) eine an die Rasteingriffselemente (27) angepasste Anzahl in Umfangsrichtung beabstandet zueinander angeordneter Rastanschlagselemente (18) aufweist, wobei die Anzahl der Rastanschlagselemente (18) und deren jeweilige Erstreckung in Umfangsrichtung so vorgegeben sind, dass in einer Verriegelungsausrichtung des Dorns (4) innerhalb der Nietkörperausnehmung (3) die Rasteingriffselemente (27) des Dorns (4) einen formschlüssigen Eingriff mit den Montageflächen (19) oder den Demontageflächen (20) der Rastanschlagselemente (18) des Nietkörpers (2) bilden, und dass in einer Verlagerungsausrichtung des Dorns (4) innerhalb der Nietkörperausnehmung (3) die Rasteingriffselemente (27) des Dorns (4) in Längsrichtung zwischen den Rastanschlagselementen (18) des Nietkörpers (2) frei verlagerbar sind.

4. Blindniet (1) nach einem der voranstehenden Ansprüche, **dadurch gekennzeichnet, dass** der hülsenförmige Nietschaftabschnitt (6) des Nietkörpers (2) mehrere in Längsrichtung verlaufende und in Umfangsrichtung beabstandet zueinander angeordnete Verformungsstege (13) aufweist, die durch eine in Längsrichtung auf die Verformungsstege (13) einwirkende Druckkraft radial aufgeweitet und durch eine in Längsrichtung auf die Verformungsstege (13) einwirkende Zugkraft radial zusammengezogen werden können.

5. Blindniet (1) nach einem der voranstehenden Ansprüche, **dadurch gekennzeichnet, dass** der hülsenförmige Nietschaftabschnitt (6) des Nietkörpers (2) an dem Nietkörperkopf (7) einen ringförmigen Festlegungsabschnitt (14) mit mindestens einem radial nach innen ragenden Dornanschlagselement (15) für eine axiale Festlegung des Dorns (4) in dem Festlegungsabschnitt (14) aufweist.

6. Blindniet (1) nach Anspruch 5, **dadurch gekennzeichnet, dass** der Dorn (4) an einem dem Nietkörperkopf (7) zugewandten Einführungsende einen sich mit zunehmendem Abstand von dem Einführungsende radial aufweitenden Festlegungsflansch (21) und in einem Abstand von dem Festlegungsflansch (21) mindestens ein radial nach außen verlagerbares Festlegungsrastelement (24) aufweist, welches auf einer von dem Einführungsende abgewandten Seite des Dornanschlagselements (15) einen formschlüssigen Eingriff mit dem Dornanschlagselement (15) bildet.

7. Blindniet (1) nach einem der voranstehenden Ansprüche, **dadurch gekennzeichnet, dass** der Dorn (4) zwischen dem mindestens einen radial nach außen vorspringenden Rasteingriffselement (27) und dem Greifabschnitt (9) eine Sollbruchstelle (10) aufweist, sodass der Greifabschnitt (9) des Dorns (4) an der Sollbruchstelle (10) von einem mit dem Nietkörper (2) in Eingriff stehenden Nietkörperabschnitt (8) des Dorns (4) abtrennbar ist.

8. Blindniet (1) nach Anspruch 7, **dadurch gekennzeichnet, dass** der Dorn (4) an einem der Sollbruchstelle (10) zugewandten Ende des Nietkörperabschnitts (8) eine nicht rotationssymmetrische Ausnehmung (30) aufweist, die nach dem Abtrennen des Greifabschnitts (9) von außen zugänglich ist und einen drehfesten Eingriff mit einem Demontagewerkzeug (37) ermöglicht.

9. Blindniet (1) nach Anspruch 7 oder Anspruch 8, **dadurch gekennzeichnet, dass** das radial nach außen vorspringende Rasteingriffselement (27) an einer der Sollbruchstelle (10) zugewandten Federzunge (26) angeordnet ist und der Dorn (4) in einem der Sollbruchstelle (10) zugewandten Verformungsbereich des Greifabschnitts (9) Ausnehmungen aufweist, die eine radiale Verlagerung der Federzunge (26) mit dem radial nach außen vorspringenden Rasteingriffselement (27) ermöglichen.

10. Verfahren zum Demontieren eines Blindniets (1) mit einem Nietkörper (2), der einen hülsenförmigen und radial aufweitbaren Nietschaftabschnitt (6) und einen radial über den Nietschaftabschnitt (6) vorspringenden Setzkopfabschnitt (5) sowie einen Dorn (4) aufweist, der an einem dem Setzkopfabschnitt (5) gegenüberliegenden Nietkörperkopf (7) mit dem Nietkörper (2) verbunden ist und sich entlang einer Längsrichtung durch den Nietkörper (2) hindurch bis über den Setzkopfabschnitt (5) hinaus erstreckt, sodass in einem Montageschritt der Nietkörper (2) mit dem Nietkörperkopf (7) voran durch eine durchgehende Ausnehmung (31) in einer Bauteilanordnung (34) hindurchgeführt werden kann, bis der Setzkopfabschnitt (5) an einer dem Setzkopfabschnitt (5) zugewandten ersten Außenseite (35) der Bauteilanordnung (24) anliegt, und der Dorn (4) an einem in der Längsrichtung von dem Nietkörper (2) abstehenden Greifabschnitt (9) ergriffen und in Längsrichtung so in eine Aufweitungsposition verlagert und darin festgelegt werden kann, dass der daran festgelegte Nietkörperkopf (7) in Richtung des Setzkopfabschnitts (9) verlagert und der hülsenförmige Nietschaftabschnitt (6) dadurch gestaucht und dabei radial aufgeweitet wird, bis der Nietschaftabschnitt (6) formschlüssig an einer dem Setzkopfabschnitt (5) abgewandten zweiten Außenseite (36) der Bauteilanordnung (34) anliegt, und dass der Greifabschnitt (9) des Dorns (4) an einer Sollbruchstelle (10) von einem mit dem Nietkörper (2) in Eingriff stehenden Nietkörperabschnitt (8) des Dorns (4) abgetrennt wird, **dadurch gekennzeichnet, dass** in einem Demontageschritt der in der Aufweitungsposition festgelegte Dorn (4) in Umfangsrichtung verdreht und dabei die Festlegung des Dorns (4) in der Aufweitungsposition gelöst wird, dass der Dorn (4) in Richtung des Nietkörperkopfs (7) in eine Demontageposition verlagert und der hülsenförmige Nietschaftabschnitt (6) dadurch gestreckt und dabei radial zusammengezogen wird, bis der Nietschaftabschnitt (6) nicht mehr in einem formschlüssigen Eingriff mit der dem Setzkopfabschnitt (5) abgewandten zweiten Außenseite (36) der Bauteilanordnung (34) steht, dass der Dorn (4) in der Demontageposition so festgelegt wird, dass sich der hülsenförmige Nietschaftabschnitt (6) des Nietkörpers (2) nicht mehr radial aufweiten kann, und dass anschließend der Nietkörper (2) in Richtung des Setzkopfabschnitts (5) aus der Ausnehmung (31) in der Bauteilanordnung (34) herausgezogen wird.

11. Verfahren nach Anspruch 10, **dadurch gekennzeichnet, dass** der Dorn in dem Demontageschritt mit Hilfe eines Demontagewerkzeugs (37) verdreht wird, welches in einen drehfesten Eingriff mit einer von dem Setzkopfabschnitt (5) zugänglichen nicht rotationssymmetrischen Ausnehmung (30) des Nietkörpers (2) gebracht wurde.
